# FASCICULE DE BREVET EUROPEEN

(11) **EP 0 982 168 B1**
(45) Date de publication et mention de la délivrance du brevet: **08.10.2003**
(21) Numéro de dépôt: 99202663.3
(22) Date de dépôt: 17.08.1999
(51) Int. Cl.: B60K 11/08

(54) **Dispositif et procédé d'évacuation des calories d'un compartiment**
Vorrichtung und Verfahren zur Wärmeabfuhr aus einem Motorraum
Device and method for heat discharge from a compartment

(30) Priorité: 24.08.1998 FR 9810665
(43) Date de publication de la demande: 01.03.2000
(73) Titulaire: FILTERWERK MANN + HUMMEL GMBH, 71638 Ludwigsburg (DE)
(72) Inventeur: Cottereau, Marc, 53000 Laval (FR); Rhoumy, Philippe, 53000 Laval (FR)
(74) Mandataire: Voth, Gerhard, Dipl.-Ing.

(56) Documents cités:
- DE-A- 4 117 230
- FR-A- 2 667 549
- PATENT ABSTRACTS OF JAPAN vol. 096, no. 010, 31 octobre 1996 (1996-10-31) & JP 08 164756 A (TOYOTA MOTOR CORP), 25 juin 1996 (1996-06-25) & JP 08 164756 A (TOYOTA MOTOR CORP)

## Description

La présente invention concerne un dispositif et un procédé d'évacuation des calories d'un compartiment qui comprend un moteur thermique.

Les moteurs thermiques nécessitent généralement, afin de fonctionner dans les conditions optimales, d'être refroidis en permanence pendant leur fonctionnement. On a développé depuis longtemps des circuits de refroidissement par eau ou par air chargés de maintenir l'environnement immédiat des chambres de combustion à une température qui n'excède jamais celle la plus élevée compatible avec la bonne tenue des pièces mécaniques statiques ou en mouvement présentes dans le moteur.

Fréquemment à l'heure actuelle, on a cherché à améliorer l'isolation des compartiments moteur, de manière à limiter le dégagement d'odeurs et la diffusion de vibrations et de bruits indésirables. Ces nouvelles exigences, couplées au fait que l'espace libre au sein des compartiments moteur a eu tendance à diminuer en raison du développement des véhicules compacts et légers, sont en partie responsables du net réchauffement de l'ambiance dans laquelle baigne le moteur au sein du compartiment.

Un autre responsable de ce réchauffement a été la tendance à incorporer autour des moteurs modernes de plus en plus d'accessoires, comme le compresseur ou le turbocompresseur d'air, qui fonctionnent à température très élevée et génèrent des points chauds supplémentaires dans le compartiment moteur.

Il en est résulté un danger d'échauffement exagéré de l'ambiance du compartiment moteur que les circuits de refroidissement classiques ne parviennent pas à limiter complètement.

Il a donc été souhaitable de fournir des moyens de refroidissement de cette ambiance, afin de ne pas nuire au rendement global du moteur et de ne pas mettre en péril les performances mécaniques de certains organes et accessoires se trouvant à sa périphérie.

Il a par exemple été proposé d'introduire dans le compartiment un conduit amenant l'air frais aspiré par le ventilateur du circuit de refroidissement vers l'arrière du compartiment moteur afin de mieux répartir l'arrivée d'air frais dans l'ensemble du volume du compartiment (demande de brevet français 2667549).

Dans la demande de brevet japonais JP-08/164756, on décrit un capot de compartiment moteur d'une automobile qui porte sur sa face interne un large conduit plat amenant l'air frais prélevé sur la face avant du véhicule vers la partie arrière d'un moteur transversal.

Ces divers systèmes présentent cependant l'inconvénient de ne refroidir qu'une seule des zones chaudes de l'ambiance. Par ailleurs, le débit et, partant, l'efficacité de refroidissement de tels systèmes restent faibles du fait qu'ils se bornent à introduire de l'air frais et n'évacuent pas directement les calories des points les plus chauds de l'ambiance du compartiment. Le document DE 41 17 230 A divulgue un dispositif selon la préambule de la revendication 1.

L'invention a dès lors pour objet de fournir un dispositif qui réalise le refroidissement de l'ensemble des zones plus chaudes de l'ambiance d'un compartiment moteur, en mouvement ou statique, avec une efficacité satisfaisante et qui permet l'emploi de matériaux variés pour la réalisation des organes périphériques et des accessoires du moteur.

A cet effet, l'invention concerne un dispositif d'évacuation des calories d'un compartiment en accord avec la revendication 3.

Par compartiment, on entend désigner un espace ouvert ou fermé, délimité par une ou plusieurs parois ou faces. Une paroi ou partie de paroi est mobile et permet l'ouverture et l'accès au moteur contenu dans le compartiment.

Le moteur thermique présent dans le compartiment est un moteur convertissant l'énergie calorifique fournie par la combustion d'un carburant en énergie mécanique. Il peut être constitué de tout type de moteur à combustion interne, à pistons ou rotatif, à carburant liquide (comme, par exemple : essence, fuel, alcool...) ou gazeux (comme, par exemple : gaz de pétrole, gaz naturel, gaz pauvre, hydrogène, méthane...).

Par extension, on entend également désigner par moteur thermique un ou plusieurs moteurs électriques alimenté par au moins une pile à combustible ou un accumulateur.

Le conduit est disposé de façon à traverser la partie supérieure du compartiment comprenant le moteur thermique. Il peut se matérialiser sous des formes diverses et être monté dans le compartiment de toute manière permettant un accès aisé pour l'entretien du moteur et une bonne couverture des zones les plus chaudes de l'ambiance.

Il peut en particulier être fixé au moteur lui-même, ou être solidaire du compartiment. En variante, il peut aussi être solidaire de la paroi du compartiment qu'il est possible d'ouvrir.

Une des extrémités du conduit fait office d'entrée pour l'air extérieur. Selon l'invention, cette extrémité est située dans une zone plus froide à proximité immédiate d'une face du compartiment. Cette zone est par exemple située derrière des ouïes d'aération percées dans une face du compartiment.

Il est possible, en variante, d'installer un ventilateur dans la zone plus froide à proximité de l'extrémité du conduit, de manière à mieux aspirer l'air extérieur et à le forcer, tout au moins en partie, à pénétrer par l'extrémité du conduit.

Le conduit traverse la partie supérieure du compartiment en direction d'au moins une zone qui débouche sur l'extérieur. Cette zone peut se situer à des emplacements divers dans le compartiment. Elle est généralement située dans une partie opposée à celle de la face où l'air extérieur pénètre dans le compartiment.

Dans la zone débouchant sur l'extérieur règne une pression inférieure ou égale à celle de l'ambiance du compartiment. Avantageusement, une pression inférieure à celle de l'ambiance règne dans cette zone. Les moyens pour réaliser cette dépression par rapport à l'intérieur du compartiment peuvent être de nature diverse. On peut, par exemple, utiliser un ventilateur placé dans le compartiment pour créer une différence positive de pression entre l'intérieur du compartiment et l'extérieur, ou encore, dans le cas où le compartiment fait partie d'un engin mobile, profiter de la création de remous aérodynamiques provoqués par la pénétration du mobile dans l'atmosphère ambiante externe au compartiment, la sortie du conduit étant dirigée vers la ou les zones externes au compartiment où se créerait localement une dépression sous les couches d'air animées de tels remous. Pareilles zones turbulentes se créent généralement à proximité d'angles vifs présents dans la forme du mobile ou dans la couche d'air qui sépare le mobile du sol. Leur localisation précise et leur intensité dépendent de la forme exacte du mobile et de sa vitesse de pénétration dans l'atmosphère.

Selon l'invention, le conduit porte au moins une ouverture servant à l'aspiration vers l'intérieur du conduit de l'air ambiant du compartiment, par effet d'éjection sous l'impulsion de la vitesse de l'air extérieur qui circule dans le conduit.

Judicieusement, on pourra situer au moins une ouverture au droit d'une zone plus chaude de l'ambiance du compartiment.

De manière préférée, le conduit présente du côté de l'extrémité située dans une zone plus froide destinée à l'entrée air, une section qui se rétrécit. L'air extérieur est ainsi avantageusement accéléré par effet de venturi.

Dans un mode de réalisation préféré, le compartiment comporte un ventilateur et le conduit est muni d'au moins une ouverture connectée à une tuyère d'aspiration dirigée vers une zone située à l'arrière du ventilateur, en surpression par rapport au reste de l'ambiance du compartiment. Dans le cas où le compartiment est fixe ou fait partie d'un engin mobile à l'arrêt, ce mode de réalisation présente l'avantage de ne pas interrompre l'évacuation des calories alors qu'il n'existe aucune zone en dépression dans sa proximité immédiate.

Selon ce mode de réalisation préféré, le ventilateur peut être associé ou non à un radiateur fonctionnant comme échangeur thermique dans lequel circule le liquide de refroidissement du moteur.

Dans un autre mode de réalisation du dispositif, le conduit peut être équipé d'un silencieux phonique. Par silencieux phonique, on entend désigner tout dispositif capable d'empêcher ou tout au moins de filtrer le bruit généré dans le compartiment. Tout type de silencieux phonique connu peut convenir. Un silencieux à chicanes convient bien, à condition que la perte de charge introduite reste négligeable par rapport à la différence de pression qui règne entre l'intérieur et l'extérieur du compartiment. Pour être négligeable, cette perte de charge doit rester inférieure à 40 % de cette différence de pression. De préférence, elle doit rester inférieure à 20 % de cette différence.

Le conduit peut être réalisé au moyen de toute matière adaptée au séjour dans une atmosphère de compartiment moteur. En particulier, on préfère utiliser comme matière une matière plastique. Tous les types de matière plastique peuvent convenir. Des matières plastiques convenant bien appartiennent à la catégorie des matières thermoplastiques ou des matières thermodurcissables. Les matières thermoplastiques conviennent tout particulièrement bien.

Les matières thermoplastiques de synthèse sont préférées. Tout type de polymère ou de copolymère thermoplastique dont les propriétés mécaniques et thermiques sont adaptées aux conditions de température régnant dans l'ambiance du compartiment conviennent. Des exemples de telles matières thermoplastiques sont, de manière non limitative : le polypropylène et le polyamide. Un mélange de polymères ou de copolymères peut aussi être utilisé, de même qu'un mélange de matières polymériques avec des charges inorganiques, organiques et/ou naturelles comme, par exemple, mais non limitativement : le carbone, les sels et autres dérivés inorganiques, les fibres naturelles ou polymériques.

Le conduit en matière thermoplastique peut être fabriqué par toute technique bien connue en soi dans le domaine de la mise en oeuvre des matières plastiques, telle que, par exemple, l'extrusion, l'extrusion-soufflage, l'injection et l'injection-soudage.

Le conduit peut avantageusement être fabriqué par extrusion-soufflage. Le corps creux obtenu peut intégrer des ouvertures faisant office d'ouïes d'aspiration.

Avantageusement, on peut, en variante au dispositif selon l'invention, y intégrer un ou plusieurs éléments associés au fonctionnement d'un moteur thermique. En particulier, on peut y intégrer des éléments associés à l'admission d'air, par exemple le boîtier du filtre à air et/ou au moins un des conduits d'admission d'air du moteur.

Dans cette variante, le dispositif tel que notamment, le conduit-filtre à air et/ou, éventuellement, conduits d'admission d'air peut être fabriqué en une seule opération sous la forme d'une pièce complexe à éléments solidaires ou peut, au contraire, résulter d'un montage du filtre et/ou des conduits d'admission préalablement fabriqués séparément de manière indépendante.

Le dispositif conforme à l'invention convient particulièrement bien pour évacuer les calories d'un compartiment moteur de véhicule automobile.

Dans ce cas, l'extrémité du conduit située dans une zone plus froide est avantageusement située à proximité d'une face du véhicule. En particulier, la zone plus froide sur laquelle s'ouvre le conduit est la calandre située sur une face du compartiment moteur. Le conduit est situé dans la partie supérieure de ce compartiment, à faible distance du capot moteur. Une ou plusieurs ouvertures sont réalisées dans le conduit au droit des organes les plus chauds du moteur, tels que : collecteur d'échappement, turbocompresseur, carter et cache-soupapes.

Une zone débouchant sur l'extérieur se trouve en pied de pare-brise, là où sè crée une dépression due aux mouvements tourbillonnaires, pendant le déplacement du véhicule à vitesse élevée. Une autre zone débouchant sur l'extérieur se situe à la partie inférieure du compartiment moteur. Elle débouche généralement sous la partie centrale du véhicule où se développent aussi des turbulences aérodynamiques lors du déplacement rapide du véhicule.

Le conduit peut être solidaire du capot moteur. Il peut aussi, en variante être fixé au moteur ou au compartiment eux-mêmes.

Lorsque le véhicule se déplace, le front de pression créé à l'endroit de la pénétration dans l'air atmosphérique provoque l'entrée de ce dernier dans le conduit qui débouche sur la face avant du véhicule et le force à traverser ce conduit dans toute sa longueur.

De préférence, le conduit présente une forme telle que, dans sa partie initiale, la section diminue légèrement, de manière progressive par rapport à l'extrémité située dans une zone plus froide, réalisant ainsi un convergent. Il en résulte une augmentation de la vitesse de l'air qui traverse ce convergent.

L'ouverture simple ou multiple pratiquée au droit des points chauds du moteur peut être constituée d'une simple découpe circulaire ou de forme quelconque fermée, pratiquée dans le conduit. Elle peut aussi, alternativement, consister en une embase réalisée de manière quelconque sur une découpe du conduit, par exemple, en pliant vers l'extérieur à angle droit les lèvres de la découpe sur quelques centimètres.

Dans les compartiments moteur de véhicules automobiles, on préfère aussi munir le conduit d'une tuyère d'aspiration. Généralement, cette tuyère est dirigée à proximité immédiate de l'arrière du ventilateur qui équipe le radiateur du circuit de liquide de refroidissement.

La tuyère dirigée vers le ventilateur peut avoir une forme cylindrique ou, de préférence, tronc-conique, le diamètre le plus grand étant situé du côté du ventilateur.

Lorsque le véhicule est à l'arrêt, aucun débit d'air n'entre par la face d'entrée du compartiment et c'est l'ensemble ventilateur-tuyère qui prend le relai pour forcer de l'air à grande vitesse dans le conduit et alimenter les éjecteurs disposés plus loin sur ce conduit afin d'aspirer l'air chaud du compartiment.

Lorsque le véhicule est en mouvement, l'effet de l'ensemble tuyère-ventilateur s'ajoute à celui de l'air circulant naturellement dans le conduit du fait du déplacement du véhicule.

Le dispositif selon l'invention présente l'avantage de permettre l'évacuation efficace des calories d'un compartiment moteur même lorsque celui-ci fait partie d'un engin fixe ou d'un mobile qui garde l'arrêt pendant de longues périodes.

La présente invention concerne également un procédé pour évacuer des calories d'un compartiment comprenant un moteur thermique, selon lequel on aspire l'air ambiant du compartiment au travers d'au moins une ouverture pratiquée dans un conduit dont l'extrémité est située à proximité immédiate d'une face du compartiment, qui traverse la partie supérieure de celui-ci et débouche sur au moins une zone débouchant sur l'extérieur où règne une pression inférieure ou égale à celle du compartiment et selon lequel on refoule l'air ambiant à l'extérieur du compartiment.

Un mode de réalisation préféré du procédé se caractérise en ce qu'au moins une ouverture est munie d'une tuyère d'aspiration dirigée vers une zone située derrière un ventilateur, en surpression par rapport à la pression régnant dans le reste de l'ambiance du compartiment.

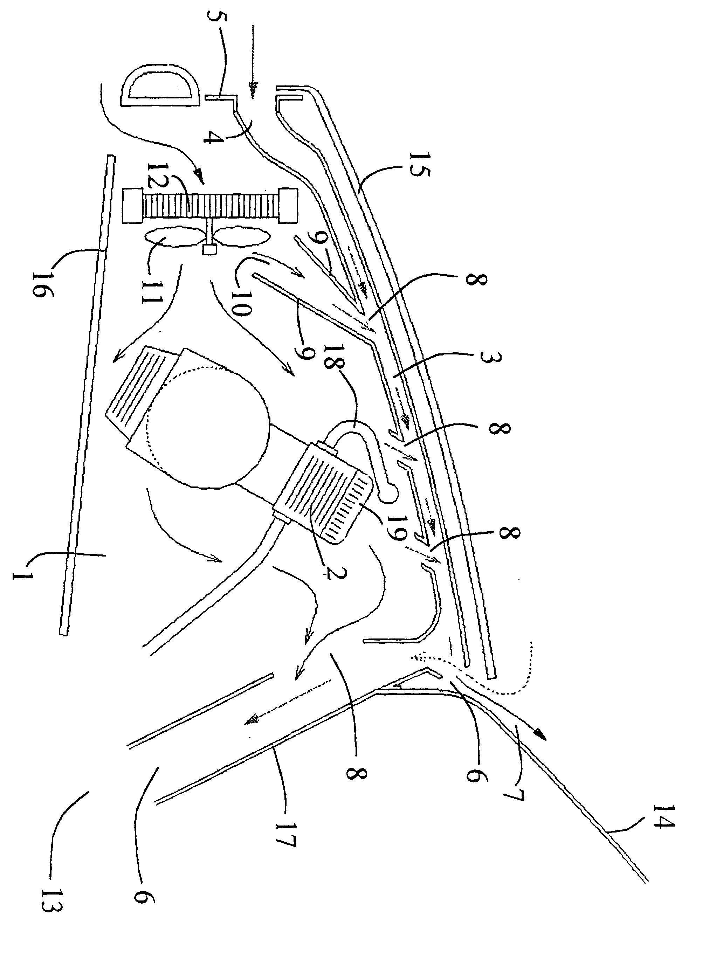

La figure ci-jointe illustre l'invention de manière non limitative.

La figure représente le schéma d'un compartiment (1) moteur (2) d'un véhicule automobile situé à l'avant du véhicule et délimité, dans sa partie avant, par une calandre (5), en hauteur par un capot (15), en bas par une plaque d'isolation (16) du moteur par rapport à l'espace situé entre le véhicule et le sol et à l'arrière par un panneau (17) de séparation du compartiment moteur avec l'habitacle. Le compartiment est prolongé et surmonté à l'arrière par un pare-brise (14).

Un conduit (3) solidaire du châssis du compartiment (1) est disposé sous le capot (15) et longe celui-ci de façon à traverser la totalité du compartiment moteur d'avant en arrière. Ce conduit a une forme aplatie et son extrémité (4) s'ouvre sur une zone plus froide à proximité de la calandre (5). Il débouche à l'extérieur sur deux zones de sortie (6) situées, respectivement, à l'extrémité du capot (15) en pied de pare-brise (7) et dans la partie inférieure arrière (13) du compartiment (1). La section et la forme du conduit (3) est telle que les pertes de charge s'opposant au passage de l'air à l'intérieur du conduit sont négligeables. Peu après l'entrée (4), le conduit (3) se rétrécit légèrement, provoquant ainsi l'accélération du débit d'air par effet de venturi.

Lorsque le véhicule se déplace dans l'air ambiant à une certaine vitesse, il se crée des turbulences aérodynamiques dans les zones de pied de pare-brise (7) et sous le véhicule (13). Ces turbulences donnent généralement naissance à des zones dépressionnaires par rapport au reste de l'ambiance du compartiment. Il en résulte que l'écoulement de l'air extérieur qui s'engouffre dans l'entrée (4) du conduit sitôt le véhicule en mouvement est encore accéléré par la dépression induite en (7) et en (13), et par l'effet d'aspiration qui en résulte.

Le conduit (3) porte, réparties dans sa longueur, trois ouvertures (8) par lesquelles de l'air provenant du compartiment (1) moteur peut pénétrer. Lorsque l'air circule à grande vitesse dans le conduit (3), il aspire l'air ambiant du compartiment (1) au travers des ouvertures (8) par effet d'éjecteur.

La première ouverture (8) située le plus en avant du moteur (2) est connectée à une tuyère divergente (9) dirigée vers le ventilateur (11) situé derrière le radiateur (12) de liquide de refroidissement. Sa fonction est de capter l'air en surpression de la zone (10) située derrière le ventilateur et de le diriger dans le conduit (3) où il se mélange à l'air provenant de l'entrée (4) tout en accroissant leur vitesse par effet de venturi. La tuyère (9) permet le fonctionnement du dispositif conforme à l'invention lorsque le véhicule se trouve à l'arrêt et qu'aucun débit d'air ne pénètre par l'entrée (4) mais que le ventilateur (11) reste en fonctionnement.

Les ouvertures (8) situées en arrière de la tuyère (9) sont disposées sur le conduit (3) en des points situés au droit des zones les plus chaudes du moteur (2), c'est-à-dire le collecteur d'échappement (18) et le cache-soupapes (19).

Le conduit (3) est réalisé en polychlorure de vinyle et a été fabriqué sous la forme d'un corps creux obtenu par extrusion-soufflage d'une paraison.

## Revendications

1. Dispositif d'évacuation des calories d'un compartiment (1) comprenant un moteur thermique (2) au moyen d'au moins un conduit (3) dont une extrémité (4) est située dans une zone plus froide à proximité immédiate d'une face (5) du compartiment (1), qui traverse la partie supérieure de celui-ci en direction d'au moins une zone (6) débouchant sur l'extérieur (7) (13) et où règne une pression inférieure ou égale à celle du compartiment (1), le conduit (3) portant au moins une ouverture (8) par laquelle l'air ambiant présent dans le compartiment (1) est aspiré dans le conduit (3) et **caractérisé en ce qu'**au moins une ouverture (8) est connectée à une tuyère d'aspiration (9) dirigée vers une zone (10) située derrière un ventilateur (11), en surpression par rapport au reste de l'ambiance du compartiment (1).

2. Dispositif selon une quelconque des revendications précédentes, **caractérisé en ce que** le conduit (3) est équipé d'un silencieux phonique.

3. Dispositif selon une quelconque des revendications précédentes, **caractérisé en ce que** le conduit (3) est réalisé à partir de matière plastique.

4. Dispositif selon une quelconque des revendications précédentes, **caractérisé en ce que** le compartiment (1) est un compartiment moteur d'un véhicule automobile.

5. Dispositif selon la revendication 5, **caractérisé en ce que** l'extrémité (4) du conduit (3) est située à proximité d'une face (5) du véhicule.

6. Dispositif selon la revendication 5 ou 6, **caractérisé en ce qu'**une zone (6) débouchant sur l'extérieur est située au pied du pare-brise (14).

7. Dispositif selon une quelconque des revendications 5 à 7, **caractérisé en ce qu'**une zone (6) débouchant sur l'extérieur est située dans une partie inférieure du compartiment moteur.

8. Procédé pour évacuer des calories d'un compartiment (1) comprenant un moteur thermique (2), selon lequel on aspire l'air ambiant du compartiment (1) au travers d'au moins une ouverture (8) pratiquée dans un conduit (3) dont l'extrémité (4) est suitée à proximité immédiate d'une face (5) du compartiment (1), qui traverse la partie supérieure de celui-ci et débouche sur au moins une zone débouchant sur l'extérieur (6) où règne une pression inférieure ou égale à celle du compartiment (1) et selon lequel on refoule l'air ambiant à l'extérieur du compartiment (1) et selon au moins une ouverture (8) est munie d'une tuyère d'aspriation (9) dirigée vers une zone (10) située derrière un ventilateur (11), en surpression par rapport au reste de l'ambiance du compartiment (1).

## Patentansprüche

1. Vorrichtung zur Evakuierung von Kalorien aus einem eine Wârmekraftmaschine(2) aufweisenden Abteil (1) mit Hilfe mindestens einer Leitung (3) deren eines Ende (4) in einem kälteren Bereich in unmittelbarer Nähe einer Vorderseite (5) des Abteils (1) liegt, wobei die Leitung den oberen Teil des Abteils in Richtung mindestens eines Bereichs (6) durchquert, der nach aussen (7) (13) mündet und wo ein tieferer oder gleicher Druck herrscht wie im Abteil (1), anwesende Umgebungsluft in die Leitung (3) eingesaugt wird, **dadurch gekennzeichnet, dass** mindestens eine Öffnung (8) an einen Ansaugstutzen (9) angeschlossen ist, der auf einen, in Bezug auf den Rest der Umgebung in Überdruck stehenden Bereich (10) gerichtet ist, der hinter einem Ventilator (11) liegt.

2. Vorrichtung nach irgendeinem der vorangehenden Ansprüche, **dadurch gekennzeichnet, dass** die Leitung (3) mit einem Schalldäpfer ausgerüstet ist.

3. Vorrichtung nach irgendeinem der vorangehenden Ansprüche, **dadurch gekennzeidchnet, dass** die Leitung (3) aus Kunstoff hergestellt ist .

4. Vorrichtung nach irgendeinem der vorangehenden Ansprüche, **dadurch gekennzeichnet, dass** das Abteil (1) ein Motorraum eines Fahrzeuges ist.

5. Vorrichtung nach dem Anspruch 5, **dadurch gekennzeichnet, dass** das Ende (4) der Leitung (3) in der Nähe einer Seite (5) des Fahrzeuges gelegen ist.

6. Vorrichtung nach dem Anpruch 5 oder 6, **dadurch gekennzeichnet, dass** ein nach aussen mündender Bereich (6) unten an der Windschutzscheibe (14) gelegen ist .

7. Vorrichtung nach irgendeinem der Ansprüche 5 bis 7, **dadurch gekennzeichnet dass** ein nach aussen mündender Bereich (6) in einem unteren Teil des Motorraums gelegen ist .

8. Verfahren zur Evakuierung von Kalorien aus einem eine Wärmekraftmaschine (2) aufweisenden Abteil (1) nach dem die Umgebungsluft des Abteils (1) angesaugt wird durch zumindest eine Öffnung (8) die in einer Leitung (3) angebracht ist, deren Ende (4) in der Nähe einer Seite (5) des Abteils (1) gelegen ist, wobei die besagte Seite den oberen Teil des Abteils durchquert und zumindestens in einen nach aussen (6) mündenden Bereich mündet wo ein niedriger oder gleicher Druck wie im Abteil (1) herrscht und nach welchem Verfahren die Umgebungsluft aus dem Abteil (1) nach aussen abgegeben wird und nach dem mindestens eine Öffnung (8)mit einem Ansaugstutzen (9) versehen ist, der auf einen Bereich (10) gerichtet ist, der hinter einem Ventilator (11) gelegen ist und der sich in Überdruck in Bezug auf den Rest der Umgebungsluft des Abteils (1) befindet .

## Claims

1. Device for evacuating calories out of a compartment (1) comprising a thermal engine (2) through at least one pipe (3) ; one end thereof being located in the coldest area near one side of the compartment (1) which traverses the upper part thereof in direction of the said compartment towards at least one area (6) meeting the outside (7) (13) and where exists a pressure inferior or equal to the chamber's one , the pipe (3) carrying at least one opening (8) by which the ambient air existing in the compartment is sucked into the pipe (3) and **characterized in that** at least one opening (8) is connected to an intake manifold (9) oriented towards an area (10) located behind the ventilator (11) which is high pressured with respect to the rest of the compartment ambiance (1).

2. Device according to any of the preceding claims, **characterized in that** the pipe (3) is equipped with a muffler .

3. Device according to any of the preceding claims, **characterized in that** the pipe (3) is realized by plastic .

4. Device according to any of the preceding claims, **characterized in that** the compartment (1) is an engine compartment of a car.

5. Device according to claim 5, **characterized in that** the end (4) of the pipe is located near a car face (5)

6. Device according to claim 5 or 6, **characterized in that** an area (6) conducting to the outside is located at the foot of the windshield (14).

7. Method according to any of the claims 5 et 7, **characterized in that** an area (6) conducting to the outside is located in a lower part of the engine compartment .

8. Method for evacuating calories (1) comprising a thermal engine (2) by which the ambient air of the compartment (I) is sucked through at least one opening (8) built in a pipe (3) which end (4) is located very near of a compartment (1) part (5); the said side traversing the upper part thereof and meeting at least an area conducting to the outside (6) where a lower pressure or a pressure equal to the compartment's one exists according to which method the ambient air is given back outside of the compartment (1) and according to which one opening (8) is equipped with an intake manifold (9) oriented towards an area (10) located behind a ventilator (11) being high pressured with respect to the rest of the compartment ambiance (1).
